**Europäisches Patentamt**

**European Patent Office**

**Office européen des brevets**

(19)

(11) Veröffentlichungsnummer : **0 446 196 A2**

## (12) EUROPÄISCHE PATENTANMELDUNG

(21) Anmeldenummer : **91890035.8**

(22) Anmeldetag : **22.02.91**

(51) Int. Cl.$^5$ : **H04B 10/20**

Ein Antrag gemäss Regel 88 EPÜ auf Berichtigung von drei Sätzen der Patentansprüche sowie der Zusammenfassung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität : **08.03.90 AT 555/90**

(43) Veröffentlichungstag der Anmeldung :
**11.09.91 Patentblatt 91/37**

(84) Benannte Vertragsstaaten :
**AT BE CH DE DK ES FR GB GR IT LI LU NL SE**

(71) Anmelder : **Alcatel Austria Aktiengesellschaft
Scheydgasse 41
A-1210 Wien (AT)**

(72) Erfinder : **Wolfgang, Johann, Ing.
Carabelligasse 5/134
A-1210 Wien (AT)**

(54) **Verfahren zum Übertragen von Binärinformationen in einem optischen Übertragungsnetzwerk.**

(57)    Zum Übertragen von Binärinformationen in aufeinanderfolgenden Zeitschlitzen eines Zeitmultiplex-Rahmenformates, das eine Anzahl von Zeitschlitzen für leitungsvermittelte Informationen sowie eine Anzahl von Bit für Steuerungs- und Synchronisierungszwecke aufweist, in einem optischen Übertragungsnetzwerk mit einer Anzahl von Endstellen und einer Zentralstelle, an die wenigstens ein Lichtwellenleiter angeschlossen ist, von welchem ausgehend über wenigstens einen Strahlenteiler und weitere Lichtwellenleiter in einer baumartigen Struktur Verbindungen zu Anschlüssen für die Endstellen vorgesehen sind, wird jeder Endstelle eine Adresse zugewiesen und eine Synchronisierung für den Sendebetrieb der phasenstarr mit der Zentralstelle verkoppelten Endstelle in Abhängigkeit von der Signallaufzeit zwischen Endstelle und Zentralstelle vorgenommen. Als Sender werden Laserdioden eingesetzt, wobei die Laserdioden der Sender der Endstellen mit einem Vorstrom beaufschlagt werden, dessen Einschaltung zu einem Zeitpunkt·vorgenommen wird, welcher maximal drei, vorzugsweise maximal zwei Zeitschlitze vor dem Beginn der Übertragung in dem dem Sender zugeordneten Zeitschlitz liegt, und dessen Abschaltung nach dem Ende des Zeitschlitzes für die Übertragung, spätestens zwei Zeitschlitze nach Ende der Übertragung erfolgt.

Fig. 3

EP 0 446 196 A2

Die Erfindung bezieht sich auf ein Verfahren zum Übertragen von Binärinformationen in aufeinanderfolgenden Zeitschlitzen eines Zeitmultiplex-Rahmenformates in einem optischen Übertragungsnetzwerk mit einer Anzahl von Endstellen und einer Zentralstelle, an die wenigstens ein Lichtwellenleiter angeschlossen ist, von welchem ausgehend über wenigstens einen Strahlenteiler und weitere Lichtwellenleiter in einer baumartigen Struktur Verbindungen zu Anschlüssen für die Endstellen vorgesehen sind, wobei jeder Endstelle eine Adresse zugewiesen wird, eine Synchronisierung für den Sendebetrieb der phasenstarr mit der Zentralstelle verkoppelten Endstelle in Abhängigkeit von der Signallaufzeit zwischen Endstelle und Zentralstelle vorgenommen wird, wobei das Rahmenformat eine Anzahl von Zeitschlitzen für Informationen sowie eine Anzahl von Bit für Steuerungs- und Synchronisierungszwecke aufweist und wobei als Sender Laserdioden eingesetzt werden.

Für optische Übertragungsnetzwerke ist es bekannt, als optische Sender Halbleiterlaser einzusetzen. Derartige Halbleiterlaser führen jedoch bei hohen Bitraten und damit großer Übertragungsgeschwindigkeit zu einer Reihe von Problemen. Aus der statischen Kennlinie typischer Halbleiterlaser ist bekannt, daß die Kennlinie, wenn die Diode in Flußrichtung betrieben wird, einen charakteristischen Knick aufweist, welcher als Schwellstrom bezeichnet wird. Solange die Laserdiode mit einem Strom beaufschlagt ist, welcher kleiner ist als der Schwellstrom, tritt kein Lasereffekt auf und die Diode arbeitet als Leuchtdiode. Erst bei Strömen, welche größer sind als der genannte Schwellstrom, setzt der Lasereffekt ein, wodurch es in der statischen Kennlinie, in welcher Lichtleistung gegen Strom aufgetragen ist, zu einem steilen Anstieg kommt. Der Schwellstrom ist hiebei in hohem Maße temperaturabhängig und die Steilheit der Kennlinie alterungsabhängig. Die tatsächliche Lichtleistung steht aus diesem Grunde nicht in unmittelbarem Zusammenhang mit dem aufgeprägten Modulationsstrom und es ist daher üblich, Halbleiterlaserdioden so zu konfektionieren, daß eine Monitorphotodiode mit einer Halbleiterlaserdiode zu einer gemeinsamen Baueinheit verbunden ist. Die vom Laser tatsächlich abgegebene Lichtleistung wird hiebei von der Monitorphotodiode erfaßt und ausgewertet.

Neben dem charakteristischen statischen Verhalten derartiger Halbleiterlaserdioden ist für hohe Übertragungsraten aber in erster Linie das dynamische Verhalten der Laserdiode von besonderer Bedeutung. Beim Aufschalten eines Stromimpulses wird der optische Impuls nach einer Verzögerungszeit abgegeben, welche bei größer werdendem Stromimpuls länger wird. Eine Verringerung der Verzögerungszeit läßt sich prinzipiell dadurch erzielen, daß der Laserdiode ein Vorstrom aufgeprägt wird, welcher maximal gleich dem Schwellstrom ist, wodurch ausgehend von einem derartigen Vorstrom eine geringere Stromimpulshöhe für die Modulation und Auslösung des Lasereffektes erforderlich ist.

Neben der möglichen Verkürzung der Verzögerungszeit bis zum Aussenden eines Laserlichtimpulses durch Anlegen eines Vorstromes lassen sich durch Aufschalten eines Vorstromes auch Relaxationsschwingungen im Gigahertzbereich, welche die Sendeimpulsform verzerren würden, verringern oder eliminieren. Derartige Verzerrungen der Pulshöhe bzw. Pulsbreite der Laserimpulsform werden auch als Bitmustereffekte bezeichnet.

Ein zu hoch eingestellter Vorstrom kann gleichfalls einen negativen Einfluß auf die optische Impulsform ausüben. Aus den genannten Gründen ist es bekanntgeworden den Arbeitspunkt eines Halbleiterlasers zu regeln, wobei die bekannten Verfahren in erster Linie darauf abzielen, den Laser konstant mit einem Vorstrom zu beaufschlagen und den Laser im Continuous-Wave-Mode zu betreiben. Näheres hiezu ist dem Artikel von Dipl.-Ing.P.Marten "Optische Sender mit Halbleiterlasern für hohe Bitraten" in Elektronik 22-/1982, S.89-94, zu entnehmen.

Für die Übertragung von optischen Informationen in optischen Übertragungsnetzwerken ist allerdings zu berücksichtigen, daß gleichzeitig eine größere Anzahl von Sendern bei einer derartigen Betriebsweise Lichtenergie zumindest in demjenigen Maße in das Netz einspeist, welche der Lichtabgabe beim Betrieb der Laserdiode als Leuchtdiode entspricht. Insgesamt ergibt sich bei Übertragungsnetzwerken mit einer Mehrzahl von Sendern bei Anwendung der bisher bekannten Maßnahmen auf diese Weise ein optischer Sockel in den Modulationspausen, welcher bei entsprechend großer Zahl von Sendern die Erkennung des eigentlichen Nutzsignales wesentlich erschwert oder gar unmöglich macht.

Die Erfindung zielt nun darauf ab, ein Verfahren der eingangs genannten Art zu schaffen, bei welchem in optischen Übertragungsnetzwerken mit einer Vielzahl von Sendern eine einwandfreie Signalerkennung und damit eine saubere Impulsform auch bei hohen Übertragungsraten sowie ein geringes Hintergrundrauschen ermöglicht wird. Die Erfindung berücksichtigt hiebei insbesondere den Umstand, daß im Übertragungsnetzwerk, bei welchem Binärinformation in aufeinanderfolgenden Zeitschlitzen eines Zeitmultiplexrahmenformates gesendet werden, jeder Sender eine bestimmte Adresse und damit einen bestimmten dem Sender zugeordneten Sendezeitraum zur Verfügung hat. Auf der Basis der Möglichkeiten eines derartigen Zeitmultiplexrahmenformates besteht die Erfindung im wesentlichen darin, daß die Laserdioden der Sender der Endstellen mit einem Vorstrom beaufschlagt werden, dessen Einschaltung zu einem Zeitpunkt vorgenommen wird, welcher maximal drei, vorzugsweise maximal zwei Zeitschlitze vor dem Beginn der Übertragung in dem dem Sender zugeordneten Zeitschlitz liegt, und daß der Vorstrom nach dem Ende des Zeitschlitzes für die Übertragung, spätestens zwei Zeitschlitze nach Ende der Übertragung abgeschaltet wird. Auf Grund der Rahmenbedingungen, wie sie durch das Zeitmultiplexrahmenformat gegeben werden, wird erfindungsgemäß der Umstand ausgenützt, daß jeder Sender einen Zeitraum zugeteilt bzw. zugewiesen erhält, über welchen er Signale über das Netz abgeben darf. Um nun zu verhindern, daß auf Grund eines konstant eingeschalteten Vorstromes insgesamt eine hohe optische Sendeleistung konstant in das Übertragungsnetzwerk eingespeist wird, wird erfindungsgemäß vorgeschlagen, die Beaufschlagung mit Vorstrom in Abhängigkeit von dem jeweils zulässigen Sendezeitpunkt vorzunehmen, um sicherzustellen, daß lediglich eine maximal zulässige Anzahl von Sendern auf Grund der Beaufschlagung mit Vorstrom Lichtenergie in das Netz abgibt. Die Begrenzung auf maximal drei, vorzugsweise maximal zwei Zeitschlitze, stellt hiebei sicher, daß die Halbleiterlaser mit Lichtausbeuten betrieben werden können, welche eine hohe Lebensdauer der Laserdioden garantiert und eine vorzeitige Zerstörung verhindert, ohne daß hiebei die Erkennbarkeit der Impulse leidet. Durch die rechtzeitige Einschaltung eines Vorstromes wird gleichzeitig auch sichergestellt, daß eine für die Erkennung geeignete Laserimpulsform als Nutzsignal zur Verfügung gestellt wird, welche auch bei hohen Übertragungsraten sicher erkannt werden kann, wobei durch das gleichzeitige Beaufschlagen mit Vorstrom auch die genannten Relaxationsschwingungen vermieden werden können.

Prinzipiell ist zur Erzielung des gewünschten impulsverbessernden Effektes bei geringstmöglicher Sendeleistung der späteste Zeitpunkt der Einschaltung des Vorstromes zu Beginn des jeweiligen der Sendelaserdiode zugeordneten Zeitschlitzes anzusetzen. Eine derartig späte Beaufschlagung der Halbleiterlaserdioden mit Vorstrom hat zwar in bezug auf das Hintergrundrauschen im Netz zweifelsfrei die günstigsten Eigenschaften. Mit Rücksicht auf die Relaxationserscheinungen und die Verzögerungszeiten zumindest bei dem ersten abgegebenen Laserimpuls kommt es aber beim Beginn einer derartigen Einschaltung des Vorstromes noch zu Verzerrungen. Sofern die Einschaltung des Vorstromes der Laserdioden erst zu Beginn des jeweiligen Zeitschlitzes, zu welchem die genannte Laserdiode senden soll, erfolgt, ist es im Rahmen der erfindungsgemäßen Verfahrensweise besonders vorteilhaft, diese Einschaltung des Vorstromes mit der Aussendung von Synchronisiersignalen vorzunehmen, worauf eine Kennung für Übertragungsbeginn gesendet wird. Die Kennung für den Übertragungsbeginn ist hiebei deshalb von Vorteil, weil von den abgegebenen Synchronisiersignalen nicht alle, insbesondere die ersten Signale nicht, korrekt erkannt werden müssen. Zur Verringerung des Hintergrundrauschens ist es aber in jedem Fall vorteilhaft so vorzugehen, daß die Abschaltung des Vorstromes gleichzeitig mit dem Übertragungsende vorgenommen wird.

Aus den eingangs genannten Zusammenhängen zwischen Vorstrom und Modulationsstrom, wie er sich aus der statischen Laserkennlinie ergibt, und dem Umstand, daß die korrekte Einstellung des Vorstromes auch für die dynamischen Eigenschaften der Laserdiode von besonderer Bedeutung ist, ist es besonders vorteilhaft so vorzugehen, daß die Größe des Vorstromes aus der Größe des Modulationsstromes und der spezifischen Kennlinie der Laserdiode berechnet wird. Da im optischen Übertragungsnetzwerk sowohl die Hauptstellen als auch die Nebenstellen über eigene Rechner verfügen, können derartige Rechner die entsprechenden Berechnungen für die Einstellung des Vorstromes dezentral vornehmen.

Da, wie eingangs erwähnt, handelsübliche Halbleiterlaser so konfektioniert werden, daß sie eine Überwachungsdiode bzw. Monitorphotodiode in der gleichen Baueinheit enthalten, in welcher auch der Halbleiterlaser angeordnet ist, läßt sich eine derartige Überwachungsdiode für zusätzliche Aufgaben heranziehen. Für die Überwachung und Regelung des Vorstromes innerhalb eines Impulses oder eines Zeitschlitzes sind konventionelle Regelschaltungen mit Sicherheit zu langsam, so daß eine unmittelbare Regelung des jeweils laufenden Bursts der emittierten Information nicht ohne weiteres möglich ist. Die Überwachungsdiode kann aber für Sicherungsaufgaben eingesetzt werden und insbesondere sicherstellen, daß die Modulationsrate und der Modulationsstrom nicht so hoch gewählt werden, daß eine Zerstörung des Lasers möglich wird. Zu diesem Zweck wird in den Fällen, in welchen eine derartige Monitorphotodiode bzw. Überwachungsdiode zur Verfügung steht, das Verfahren erfindungsgemäß so durchgeführt, daß eine Überwachungsdiode verwendet wird, deren Signal über einen Trigger und/oder Schwellwertschalter die Laserdiode kurzschließt und/oder den Vorstrom reduziert, wobei der Schwellwertschalter gleichzeitig mit der Aufschaltung des Vorstromes vor Beginn der Übertragung aktiviert und bei Beginn der Übertragung desaktiviert wird. Die Verwendung eines Triggers kann hiebei zur Abschaltung bzw. zum Kurzschließen der Laserdiode Verwendung finden, wenn die gemessene Lichtleistung als zu hoch eingestuft wird. Wenn zusätzlich ein Schwellwertschalter so geschaltet wird, daß er gleichzeitig mit der Aufschaltung des Vorstromes vor Beginn der Übertragung aktiviert wird, läßt sich ein derartiger Schwellwertschalter zur Überprüfung einer nicht korrekten Einstellung des Vorstromes verwenden. In diesen Fällen muß allerdings die Überwachungsdiode hinreichend empfindlich sein, um auch die wesentlich geringeren Lichtströme bei Betrieb der Laserdiode als Leuchtdiode sicher erkennen zu können. Sollte eine hinreichend empfindliche Überwachungsdiode nicht zur Verfügung stehen, gelingt es aber immer noch zweifelsfrei festzustellen, wenn der eingestellte Vorstrom zu hoch ist und bereits Laseremission bei der Aufschaltung des Vorstromes einsetzt.

Die Erfindung wird nachfolgend an Hand eines optischen Übertragungsnetzwerkes mit einer Hauptstelle und einer Endstelle näher erläutert, wobei naturgemäß in derartigen Übertragungsnetzwerken in der Regel eine Zentralstelle und eine große Anzahl von Endstellen Verwendung finden. Die Maßnahme, den Zeitpunkt der Aufschaltung des Vorstromes korrekt zu wählen, ist hiebei insbesondere deshalb von Bedeutung, weil eine große Anzahl von Endstellen mit einer gemeinsamen Zentralstelle in einem derartigen Übertragungsnetzwerk miteinander verbunden sind. Der Übersichtlichkeit und Einfachheit halber ist in dem nachfolgend beschriebenen Beispiel allerdings nur eine Endstelle und eine Zentralstelle gezeigt.

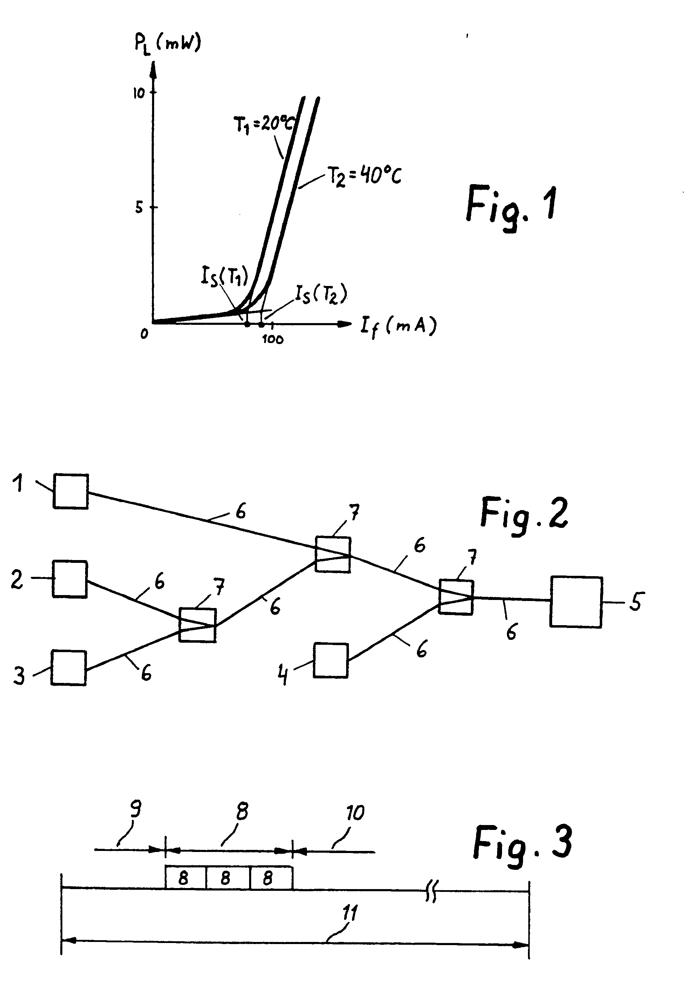

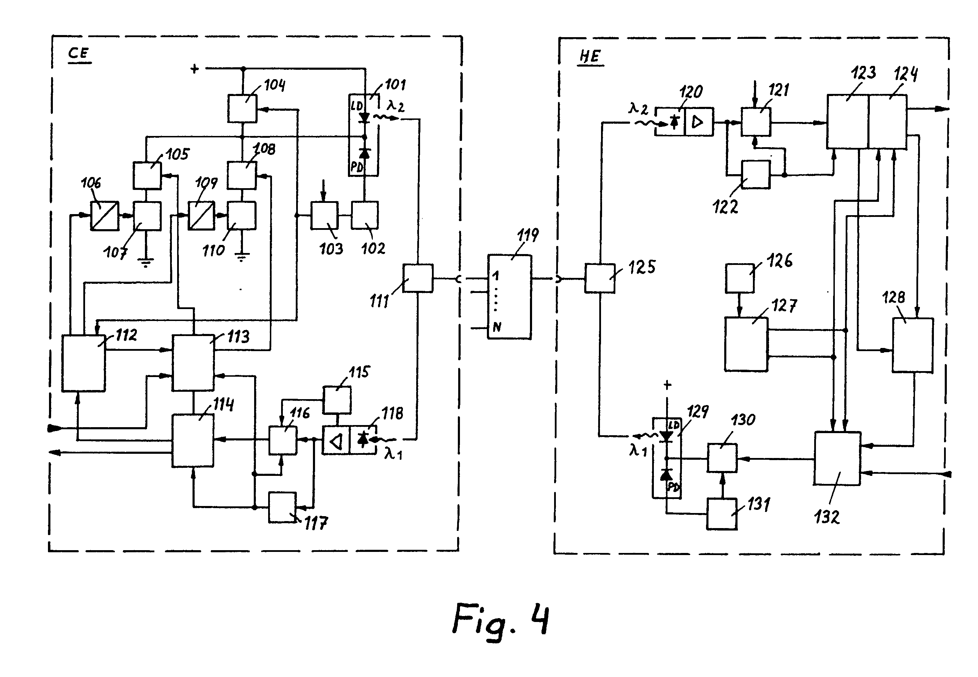

In der Zeichnung ist die Schaltungsanordnung für ein optisches Übertragungsnetzwerk unter Verwendung von Lichtwellenleitern, beispielsweise aus Quarz, Glas oder Kunststoff, näher erläutert. Für eine verlustarme Signalübertragung sind die Lichtleitfasern entsprechend geeignet zu dimensionieren und es ist eine den Lichtleitfasern angepaßte Emissionswellenlänge zu wählen. In der Zeichnung zeigt: Fig.1 statische Kennlinien einer Laserdiode; Fig.2 schematisch ein optisches Übertragungsnetzwerk zur Anwendung des erfindungsgemäßen Verfahrens; Fig.3 einen Ausschnitt aus einem Zeitmultiplex-Rahmenformat für ein derartiges Übertragungsnetzwerk und Fig.4 ein Blockschaltbild mit mehr Einzelheiten einer Endstelle und der Zentralstelle des Übertragungsnetzwerkes von Fig.2.

In optischen Übertragungsnetzwerken werden Halbleiterlaser mit Wellenlängen in den Bereichen 800 nm, 1300 nm und 1500 nm eingesetzt, wenn die erforderliche Lichtleistung im Bereich von 0,2 bis 2 mW liegt. Darunter (0,01 bis 0,1 mW) kommen auch Leuchtdioden in Betracht, insbesondere wenn die zu übertragenden Datenraten nicht zu hoch sind. Während Leuchtdioden-Sender einfach anzusteuern sind, ergibt sich aus den physikalischen Eigenschaften der Halbleiterlaser ein wesentlich größerer Aufwand bezüglich der Ansteuerung.

Fig.1 zeigt statische Kennlinien eines typischen Halbleiterlasers. Die Diode wird in Flußrichtung betrieben, die Kennlinie weist einen charakteristischen Knick auf, der als Schwellstrom (Is) bezeichnet wird. Bei Strömen If<Is tritt kein Lasereffekt auf und die Diode arbeitet als Leuchtdiode. Bei Strömen If>Is setzt der Lasereffekt ein, was durch die Steilheit der Kennlinie der Lichtleistung in Abhängigkeit vom Strom ersichtlich ist. Der Schwellstrom Is ist stark temperaturabhängig, die Steilheit der Kennlinie außerdem noch alterungsabhängig. In Fig.1 sind die Verhältnisse für Temperaturen $T_1$ und $T_2$ des Halbleiters von 20 bzw. 40°C dargestellt. Da aus dem Wert des Stromes If keine genügende Aussage über die tatsächliche Lichtleistung gewonnen werden kann, läßt sich diese mittels einer direkt am Laser angebrachten Monitor-photodiode erfassen. Dabei ist die Laserdiode in einem Gehäuse eingebaut und gibt an ihrer vorderen Facette durch ein Glasfenster des Gehäuses das Nutzsignal ab, während das durch die hintere Facette abgegebene Licht auf die Monitor-photodiode fällt. Bei Punkt-zu-Punkt-Verbindungen zwischen einem einzigen Sender und einem einzigen Empfänger ist eine Arbeitspunkt-Einstellung bzw. -Regelung der Laserdiode unter Einbeziehung der Monitor-Photodiode einfach und günstig, insbesondere dann, wenn man davon ausgehen kann, daß der Sender kontinuierlich ein Signal, z.B. einen PCM-Bitstrom, aussendet. Dagegen sind die Verhältnisse bei einem Netzwerk, in welchem die Sender der einzelnen Stationen jeweils nur in kurzen Zeitschlitzen aus einer Anzahl von Bit bestehende Bursts aussenden, wesentlich komplizierter, und darauf wird später noch näher eingegangen werden.

In Fig.2 ist ein Beispiel eines optischen Übertragungsnetzwerkes mit baumartiger Struktur dargestellt, wobei jeweils ein Lichtwellenleiter für die Signalübertragung in beiden Richtungen eingesetzt ist. Hiebei erfolgt die Nachrichtenübermittlung zwischen Endstellen 1, 2, 3 und 4 einerseits und einer Zentralstelle 5 andererseits über Lichtwellenleiter 6 und Strahlenteiler 7. Für jede Verbindung existiert ein eindeutiger Weg mit konstanter Länge und einer dieser Länge entsprechenden Signallaufzeit. Die Signallaufzeiten zwischen der Zentralstelle und den einzelnen Endstellen sind somit im allgemeinen unterschiedlich und müssen bei der Einbindung einer Endstelle in das optische Übertragungsnetzwerk zum Einhalten des Rahmenformates berücksichtigt werden. Weiters ist bei der Übertragung die Signaldämpfung zu berücksichtigen, die nicht nur von der Leitungslänge, sondern auch von der Anzahl der vom Signal zu durchlaufenden Strahlenteiler abhängt. Hiebei ist zu beachten, daß sich eine Signalabschwächung in den Strahlenteilern nicht nur auf dem Weg von der Zentralstelle zu einer Endstelle, sondern auch auf dem Weg von einer Endstelle zur Zentralstelle ergibt.

Bei Übermittlung einer Nachricht von der Zentralstelle 5 an die Endstellen 1...4 bzw. an eine angesprochene Endstelle liegt der einfache Fall einer Punkt-zu-Mehrpunkt-Verbindung vor, bei welcher der Sender der Zentralstelle einen kontinuierlichen Bitstrom abgibt, der von allen Endstellen empfangen wird. Dieser Fall kann mit bekannten Prinzipien gelöst werden.

Bei der Nachrichtenübermittlung von einer der Endstellen 1...4 an die Zentralstelle 5 tritt der wesentlich kompliziertere Fall einer Mehrpunkt-zu-Punkt-Verbindung auf, der eine Reihe von Problemen aufwirft. Im allgemeinen sind die Signallaufzeit und die Signaldämpfung zwischen jeder Endstelle und der Zentralstelle unterschiedlich und eine Anpassung bzw. ein Ausgleich kann am Ort der Zentralstelle nicht getroffen werden.

Ein Ausschnitt aus einem in diesem Zusammenhang zu verwendenden Zeitmultiplex-Rahmenformat ist in Fig.3 dargestellt. Jede Endstelle sendet während eines Zeitschlitzes eine Anzahl vor Bit, z.B. 8 bis 32 Bit, und hat für den Rest der Zeit inaktiv zu sein. Nach Fig.3 wird der Zeitschlitz 8 der n-ten Endstelle betrachtet, dem der Zeitschlitz 9 der (n-1)-ten Endstelle vorangeht und der Zeitschlitz 10 der (n+1)-ten Endstelle folgt. Bei einer angenommenen Übertragungsrate von 100 MBit/s, einer Burstlänge von 3 Byte entsprechend 24 Bit und einer Rahmenwiederholzeit 11 von 250 µs ergibt sich eine Bitzeit von 10 ns, eine Burstdauer von 240 ns und eine Ruhezeit von 249,76 µs.

Herkömmliche Pegelregelschaltungen sind viel zu langsam, um während eines Bursts bzw. während einer Bitzeit zu reagieren. Die lange pause schließt außerdem die Verwendung von integrierenden Reglern, wie sie für den kontinuierlichen Betrieb bekannt geworden ist, aus. Schaltungen wie nach dem eingangs erwähnten Artikel in Elektronik 22/1982, S.89-94, erfordern bei Ausfall des Modulationssignals sogar eine Abschaltung, da ansonsten die Regelung instabil wird.

Jede Endstelle darf nur während des ihr zugewiesenen Zeitschlitzes senden. Während der Pausenzeit darf kein Licht emittiert werden, da sich ein Ruhelicht von n-1 Endstellen am Empfänger der Zentralstelle überlagern würde und ein Vielfaches der Lichtleistung der einzigen zu diesem Zeitpunkt aktiven Endstelle ergeben könnte. Ein Ruhelichtsockel erzeugt in der Empfangsphotodiode erhebliches Schrotrauschen, welches die nutzbare Empfindlichkeit des Empfängers reduziert oder im Extremfall das Nutzsignal überdeckt.

Weiters muß der Burst von jeder Endstelle mit dem Takt der Zentralstelle synchronisiert sein und um ein der Signallaufzeit bis zur Zentralstelle entsprechendes Maß voreilend ausgesendet werden, damit die Bursts von den verschiedenen Endstellen am Empfänger der Zentralstelle jeweils genau passend in den ihnen zugewiesenen Zeitschlitzen des Rahmens einlangen, ohne daß an den Grenzen zweier Zeitschlitze Überlappungen auftreten.

Die Verzerrungen des von mit Stromimpulsen ohne Anwendung eines Vorstromes angesteuerten Laserdioden ausgesendeten Lichtstromes, wobei es sich hauptsächlich um eine Einschaltverzögerung handelt, die bei handelsüblichen Typen einige ns betragen kann, werden noch tragbar sein, solange die Einschaltverzögerung nicht größer ist als etwa 10 % der Bitzeit. Durch eine solche Bedingung wird die Übertragungsrate beschränkt.

Um die Übertragungsrate zu steigern, ohne dabei andere wesentliche Störungen in das Übertragungsnetzwerk einzuführen, bestehen gemäß der Erfindung folgende Möglichkeiten.

Der Halbleiterlaser wird binär moduliert, allerdings steigt der modulierende Stromimpuls nur beim ersten Bit von Null an. Bei den weiteren zu sendenden Bits wird ein Vorstrom $Iv = < Is$ eingeprägt, der zu Ende des letzten Bits des jeweiligen Bursts wieder abgeschaltet wird. In den Pausenzeiten wird kein Ruhelicht emittiert und gleichzeitig werden die Verzerrungen bei allen Bits, außer dem ersten des Bursts, minimiert. In diesem, bei hohen Übertragungsgeschwindigkeiten zweckmäßigen Fall tragen die ersten (im Minimum nur das erste) Bit eines Sendebursts keine Information, sondern dienen zum "Einschwingen" des Übertragungskanales sowie zum allfälligen Synchronisieren einer Taktrückgewinnungsschaltung (PLL) im Empfangsteil.

Die erforderliche Größe des Vorstromes wird aus der Größe des Modulationsstromes (Spitzenwert) und der bekannten Steigung der statischen Laserkennlinie näherungsweise errechnet. Dieses Verfahren wird durch die digitale Einstellung des Signalpegels und das Vorhandensein eines Mikroprozessors in jeder Endstelle erleichtert.

Es fließt in den Pausenzeiten kein Strom und es wird auch kein Ruhelicht emittiert.

Nach einer anderen Ausgestaltung wird der Vorstrom nicht zu Beginn des zweiten Bits eingeschaltet, sondern bereits eine Zeit Tx vor dem Beginn des Bursts. Zweckmäßigerweise wird Tx so gewählt, daß einen Zeitschlitz vor dem eigenen Zeitschlitz der Sender durch Aufschalten des Vorstromes aktiviert wird. In diesem Fall ist gewährleistet, daß alle Bits des Bursts mit minimaler Verzerrung übertragen werden. Es ist gleichzeitig sichergestellt, daß Ruhelicht nur von einem einzigen Sender emittiert wird. Während ein Sender seinen Informationsburst abgibt, entsteht in dem in der zeitlichen Abfolge nächsten Sender schon das durch den Vorstrom verursachte Ruhelicht.

Die Monitor-Photodiode könnte entfallen, womit ein zusätzlicher wirtschaftlicher Vorteil gegenüber herkömmlichen Lösungen gegeben ist.

Wenn ein handelsübliches Laserelement verwendet wird, kann allerdings die Monitordiode zusammen mit einer einfachen Triggerschaltung als optische Leistungsbegrenzung ausgenützt werden. Dieser optische Überlastschutz spricht an, wenn auf Grund von Fehlerzuständen in der Regelung die Lichtleistung einen vorgewählten Wert übersteigt. Die Schaltung begrenzt sodann den Strom durch den Laser oder schaltet diesen unmittelbar ab und meldet einen Fehlerzustand.

In Fig.4 ist das Blockschaltbild der gesamten Anordnung bestehend aus einer Zentralstelle und einer Endstelle dargestellt. Anhand dieses Blockschaltbildes wird in der Folge die Funktion zusammenfassend beschrieben. Die erfindungsgemäße Ansteuerung des Lasers umfaßt die Blöcke 101 - 110, 112 sowie mittelbar die Blöcke 120 - 123, 128, soweit sie mit der Pegeleinstellung (Ranging) befaßt sind.

In der Zentralstelle (rechts in der Figur) wird durch den Rahmenmultiplexer 132, ausgehend von dem Mastertakt 126 und der Timinglogik 127, ein Multiplexrahmen erzeugt, der Benutzerdaten und Signalisierdaten über den Sender, bestehend aus den Blöcken 129, 130, 131 mit einer Wellenlänge 1 über den Koppler 125 in die Glasfaserübertragungsstrecke einspeist. Dieser Rahmen wird kontinuierlich gesendet und von allen Teilnehmerstationen 1..N empfangen, die jeweils die für sie relevanten Informationen auswerten. Dieser Sender ist mit herkömmlichen Ansteuerschaltungen aufgebaut, desgleichen der (links in der Figur gezeigte) endstellenseitige Empfänger, der aus den Blöcken 118, 117, 115, 116 besteht. Der Regler 115 sorgt in herkömmlicher Weise für die Anpassung der Entscheiderschwelle an die Amplitude des Signals von Block 118. Eine PLL 117 gewinnt den Takt aus dem hereinkommenden Rahmen zurück. Der Demultiplexer 114 trennt Benutzerdaten von Signalisierdaten und erzeugt auch das Synchronisiersignal, mit dem die Zeitlage des von der Endstelle ausgehenden Informationsbursts innerhalb des Rahmenformates, welches durch den Rahmenmultiplexer 113 gebildet ist, festgelegt wird. Die Signalisierungsdaten werden dem Steuerungsprozessor 112 zugeleitet, der sie verarbeitet. Ein Bestandteil dieser Daten ist die Information über den erforderlichen Sendepegel, der vom Laserelement 101 erzeugt werden soll. Diese Information kann nach einem eigenen früheren Vorschlag (AT-Patentanmeldung A 2446/89) aus dem in der Zentralstelle empfangenen Burst durch den Demultiplexer 123 und den Steuerprozessor 128 gewonnen werden.

Eine mit der Laserdiode LD im Laserelement 101 zusammengebaute Photodiode PD wird für die Einstellung des Sendepegels nicht herangezogen; vielmehr wird die von einer Endstelle ausgesendete Lichtleistung über die Empfangsdiode im Bauteil 120 der Zentralstelle bestimmt und von dieser Seite die Amplitudenregelung bewirkt. Es wird nicht der Mittel- oder Spitzenwert eines kontinuierlichen Signals erfaßt, sondern es wird der Spitzenwert eines Burstsignals so geregelt, daß er am Empfangsort optimal zu einer fest eingestellten Entscheiderschwelle des Empfängers paßt. Stellbefehle an den Sender der Endstelle werden von der Zentralstelle in digitaler Form über einen Signalisierkanal übermittelt.

Der Prozessor 112 stellt durch Ausgeben eines Binärwortes von beispielsweise 8 Bit an eine digital steuerbare Stromquelle 106 den erforderlichen Modulationsstrom Im ein. Der Strom wird vom Modulator 105 bei direkter binärer Modulation entsprechend dem gewählten Leitungscode und dem zu sendenden Datenburst im wesentlichen aus- und eingeschaltet. Die Benutzerdaten werden in geeigneter Burstform vom Multiplexer 113 ausgegeben. Zum Erzeugen eines Vorstromes Iv wird eine digital steuerbare Stromquelle 109, 110 vom Prozessor 112 eingestellt. Die Größe des Vorstromes wird dabei vom Prozessor 112 näherungsweise rechnerisch ermittelt. Der Vorstrom wird nun durch den elektronischen Schalter 108 zeitlich richtig, gesteuert von einem Strobesignal aus dem Rahmenmultiplexer 113, aus- und eingeschaltet. Bei Verzicht auf einen Betrieb der Laserdiode mit Vorstrom könnten die Blöcke 108, 109, 110 entfallen. Wenn eine Monitordiode PD im Laserelement vorhanden ist, so wird ihr Signal im Block 102 vorverstärkt und einem Trigger 103 zugeführt. Wird ein vorgewählter Grenzwert überschritten, so schließt der elektronische Schalter 104 und überbrückt die Laserdiode LD im Laserelement 101. Gleichzeitig wird der Fehlerzustand dem Prozessor 112 gemeldet. Die Anordnung LD, 102, 103, 104 stellt den optischen Überlastschutz dar, der die Laserdiode vor Zerstörung durch Überlastung schützt. Dieser Schutz ist nicht unbedingt erforderlich und kann entfallen. Vom Laserelement 101 wird so ein Informationsburst mit der Wellenlänge λ 2 über den Koppler 111 in das Netz eingespeist. Der Burst ist in seiner zeitlichen Lage in bezug auf den Multiplexrahmen und in seiner Signalamplitude so gestaltet, daß am Summierungspunkt am Koppler 125 die Bursts von allen n Teilnehmerstationen in richtiger, nicht überlappender Reihenfolge und ungeachtet der unterschiedlichen Entfernungen mit gleicher Signalamplitude eintreffen. Dadurch ist es möglich mit dem Empfänger 120, 121, der über eine fixe Entscheiderschwelle verfügt, zu empfangen. Wenn davon ausgegangen wird, daß die einzelnen Teilnehmerstationen 1..N auf Grund von Ungenauigkeiten nicht phasensynchron ihre Bursts aussenden, so kann jedem Burst eine Anzahl von Synchronisierbits (Präambel) vorangestellt werden, die dazu dienen eine PLL 122 für die Dauer eines Bursts zu synchronisieren. Der Phasenjitter, der dabei entsteht, wird durch eine Rahmensynchronisierung 124 aufgefangen, die die Informationen wieder mit dem Mastertakt synchronisiert.

## Patentansprüche

1. Verfahren zum Übertragen von Binärinformationen in aufeinanderfolgenden Zeitschlitzen eines Zeitmultiplex-Rahmenformates in einem optischen Übertragungsnetzwerk mit einer Anzahl von Endstellen und einer Zentralstelle, an die wenigstens ein Lichtwellenleiter angeschlossen ist, von welchem ausgehend über wenigstens einen Strahlenteiler und weitere Lichtwellenleiter in einer baumartigen Struktur Verbindungen zu Anschlüssen für die Endstellen vorgesehen sind, wobei jeder Endstelle eine Adresse zugewiesen wird, eine Synchronisierung für den Sendebetrieb der phasenstarr mit der Zentralstelle verkoppelten Endstelle in Abhängigkeit von der Signallaufzeit zwischen Endstelle und Zentralstelle vorgenommen wird, wobei das Rahmenformat eine Anzahl von Zeitschlitzen für Informationen sowie eine Anzahl von Bit für Steuerungs- und Synchronisierungszwecke aufweist und wobei als Sender Laserdioden eingesetzt werden, dadurch gekennzeichnet, daß die Laserdioden der Sender der Endstellen mit einem Vorstrom beaufschlagt werden, dessen Einschaltung zu einem Zeitpunkt vorgenommen wird, welcher maximal drei, vorzugsweise maximal zwei Zeitschlitze vor dem Beginn der Übertragung in dem dem Sender zugeordneten Zeitschlitz liegt, und daß der Vorstrom nach dem Ende des Zeitschlitzes für die Übertragung, spätestens zwei Zeitschlitze nach Ende der Übertragung abgeschaltet wird.

2. Verfahren nach Anspruch 1, dadurch gekennzeichnet, daß die Einschaltung des Vorstromes der Laserdiode mit der Aussendung von Synchronisiersignalen vorgenommen wird, worauf eine Kennung für Übertragungsbeginn gesendet wird.

3. Verfahren nach Anspruch 1 oder 2, dadurch gekennzeichnet, daß die Abschaltung des Vorstromes gleichzeitig mit dem Übertragungsende vorgenommen wird.

4. Verfahren nach Anspruch 1, 2 oder 3, dadurch gekennzeichnet, daß die Größe des Vorstromes aus der Größe des Modulationsstromes und der spezifischen Kennlinie der Laserdiode berechnet wird.

5. Verfahren nach einem der Ansprüche 1 bis 4, dadurch gekennzeichnet, daß eine Überwachungsdiode verwendet wird, deren Signal über einen Trigger und/oder Schwellwertschalter die Laserdiode kurzschließt und/oder den Vorstrom reduziert, wobei der Schwellwertschalter gleichzeitig mit der Aufschaltung des Vorstromes vor Beginn der Übertragung aktiviert und bei Beginn der Übertragung desaktiviert wird.

Fig. 1

Fig. 2

Fig. 3

Fig. 4